# EUROPÄISCHE PATENTSCHRIFT

(11) **EP 1 286 102 B1**
(45) Veröffentlichungstag und Bekanntmachung des Hinweises auf die Patenterteilung: **25.10.2006**
(21) Anmeldenummer: 02018138.4
(22) Anmeldetag: 14.08.2002
(51) Int. Cl.: F16L 59/153, F16L 11/12

(54) **Flexibles Rohr oder flexibler Schlauch**
Flexible pipe or flexible tube
Tube ou tuyau flexible

(30) Priorität: 22.08.2001 DE 10141021
(43) Veröffentlichungstag der Anmeldung: 26.02.2003
(73) Patentinhaber: ALCAN DEUTSCHLAND GMBH, D-37075 Göttingen (DE)
(72) Erfinder: Müller, Christian, 57462 Olpe (DE)
(74) Vertreter: HOFFMANN EITLE

(56) Entgegenhaltungen:
- EP-A- 0 375 608
- DE-A- 3 307 120
- GB-A- 2 081 415
- US-A- 5 325 893

## Beschreibung

### Technisches Gebiet

Die Erfindung betrifft ein flexibles Rohr oder einen flexiblen Schlauch, insbesondere zum Führen von Kaltluft und zum platzsparenden Einbau in engen Räumen, beispielsweise in Verbindung mit Klimageräten für Caravans.

Nachfolgend wird auf ein flexibles Rohr Bezug genommen. Dabei ist jedoch zu verstehen, das stets auch solche flexiblen Rohre gemeint sind, die einen verhältnismäßig kleinen Querschnitt aufweisen und dementsprechend gewöhnlich als Schläuche bezeichnet werden.

Derartige Rohre werden insbesondere zur Führung von Luft zu oder von einem Klimagerät eingesetzt. Dabei dient das flexible Rohr dazu, die warme oder kalte Luft zu führen, wobei zudem ein geringes Gewicht der Luftführungseinrichtungen wesentlich ist. Typische Anwendungsfälle sind im Rahmen mobiler Einrichtungen wie Wohnwagen, Wohnmobilen und ähnliches.

### Stand der Technik

Zur Führung von Warmluft werden flexible Rohre bereits vielfach eingesetzt.

Ein Beispiel dafür ist in der DE 199 32 198 A1 beschrieben, wobei ein flexibles Rohr eine temperaturbeständige Innenlage (Aluminium) aufweist, die mit einer wärmeisolierenden Außenlage aus Papier versehen ist. Die temperaturbeständige Innenlage aus Aluminium erfüllt die Funktion, die warme Luft oder auch ein anderes warmes, gasförmiges Medium durch das Rohr zu leiten, ohne dass das Rohr beschädigt wird. Dabei erhält das Rohr durch die Aluminiumlage auch die erforderliche mechanische Festigkeit. Die wärmeisolierende Außenlage dient dazu, bei einer Berührung mit dem Rohr durch Personen Verbrennungen auszuschließen und eine Beschädigung von umgebenden Gegenständen durch die übermäßige am Rohr vorhandene Hitze zu verhindern. Bei der in der DE 199 32 198 A1 beschrieben Lösung ist die Außenlage aus einem wärmeisolierenden Material, beispielsweise Papier, mit der Innenlage, beispielsweise aus Aluminium, nur stellenweise in Berührung und im übrigen von dieser zumindest geringfügig beabstandet.

Ein Rohr zum Führen von Kaltluft ist in der US 5 325 893 beschrieben. Da beim Führen von in Bezug auf die Umgebungsluft kälterer Luft in einem Rohr dieses durch die geführte kältere Luft üblicherweise so weit abgekühlt wird, dass die wärmere Außenluft unter die sogenannte Taupunktgrenze kommt, schlägt sich Feuchtigkeit als Tau an dem Rohr an dessen Außenseite nieder und läuft ins Gerät oder tropft auf den Boden der Umgebung, wenn keine Gegenmaßnahmen am Rohr ergriffen werden. Damit dies vermieden wird, beschreibt die US 5 325 893 eine am Rohr angebrachte Außenschicht aus Papier bzw. Spezialpapier, das die Feuchtigkeit aufsaugt. Dies ist jedoch nur in einem gewissen Maß möglich. Darüber hinaus vorhandenes niedergeschlagenes Wasser tropft als überschüssiges Wasser ggf. ebenfalls auf den Boden. Das in der US 5 325 893 beschriebene Rohr ist ein geripptes Rohr, das eine metallische innere Schicht hat, auf die mittels Klebemittel die Papierschicht aufgebracht ist. Das verwendete Papier hat thermische Leitfähigkeiten, die unter denen des Metalls liegen, aus dem das Rohr gebildet ist. Zusätzlich weist das Papier eine Struktur auf, bei der Minilufträume (Bläschen) im Papier enthalten sind. Somit isoliert das Papier das Rohr von der Umgebungstemperatur und verhindert dadurch eine Kondensation.

Als eine weitere Maßnahme zur Erzeugung einer hohen Wärmeisolationswirkung des Rohrinnenraums gegenüber der Umgebung ist es bekannt, das Luftführungsrohr bzw. Gasführungsrohr als doppelwandige Rohrstruktur (Doppelrohr), ggf. sogar mit zusätzlichem Isolationsmaterial, auszubilden. Diese Struktur wird ebenfalls häufig zum Führen von Kaltluft, also gegenüber der Umgebung kälterer Luft, eingesetzt.

Das Herstellungsverfahren eines sog. Flexrohres ist aus der DE 30 167 19 C2 bekannt. Das sogenannte Flexrohr wird dadurch gebildet, dass ein Band schraubenförmig gewickelt wird. Das Band ist gewellt, wobei die Ränder die jeweils vorhergehenden Ränder über einen Teil der Bandbreite schindelartig überlappen und der Überlappungsbereich durch eine Umlegefalznaht, Verkleben o.ä. geschlossen ist.

Aus der DE 33 07 120 A1 ist ein Fernwärmeleitungsrohr bekannt, das ein mediumführendes Innenrohr aus einem vernetzten Kunststoff, ein Außenrohr und eine zwischen den Rohren befindliche Wärmeisolationsschicht aus aufgeschäumten Kunststoff aufweist. Ein ähnlicher Aufbau geht jeweils aus der EP 0 375 608 A1 und der GB 2 081 415 A hervor.

### Darstellung der Erfindung

Der Erfindung liegt die Aufgabe zugrunde, ein flexibles Rohr bzw. einen flexiblen Schlauch mit einer möglichst hohen Isolierwirkung zur Führung von Kaltluft im Inneren des Rohres bzw. des Schlauchs zu schaffen, wobei gleichzeitig die volle Flexibilität des Rohres bzw. Schlauchs erhalten bleibt und der Rohrdurchmesser nicht nachhaltig beeinträchtigt wird.

Diese Aufgabe wird mit einem flexiblen Rohr bzw. flexiblen Schlauch mit den Merkmalen des Anspruchs 1 gelöst.

Der Erfindung liegt der Gedanke zugrunde, den Aufbau eines bekannten flexiblen Rohrs derart zu verändern, dass bezüglich des Führens von Kaltluft eine möglichst hohe Isolierwirkung erzielt wird, um eine Tauwasserbildung an der Rohraußenseite zu vermeiden. Es hat sich herausgestellt, dass dies dadurch erreichbar ist, dass sich eine innere, isolierende Lage an eine mittlere, die Festigkeit erzeugende Lage anschließt. Durch eine weitere Lage als Außenlage, die wiederum für Isolierung sorgt, da sie als Luft einschließende Lage gestaltet ist, wird eine maximale Isolierung erzielt, was zu einer erhöhten Temperaturdifferenz zwischen der Innen- und der Außenwand des Rohres führt. Durch die so erhöhte Isolierung wird Feuchtigkeitsbildung auf der Rohroberfläche vermieden, dadurch, dass die Taupunktgrenze nicht erreicht wird. Gleichzeitig bleibt dem Rohr die volle Flexibilität erhalten und der Rohrdurchmesser wird nicht wesentlich beeinträchtigt, da die Lagen dünn und direkt anliegend an der die Festigkeit erzeugenden Lage ausgebildet sind.

Durch die erfindungsgemäße Lösung wird das Einrohrprinzip beibehalten, d. h. es ist keine nachträgliche Montage zweier Rohre zu einem Doppelrohr nötig, was eine hohe Wirtschaftlichkeit des dreilagigen Flexrohrs ergibt (oder auch: bewirkt). Dies wird insbesondere durch Vermeiden von umständlicher Montage, wie beispielsweise einem aufwendigen Schneiden auf die benötigte Anwendungslänge, erzielt, da das Rohr ein gewöhnliches Einrohr ist und so behandelt werden kann und nicht auf eine Doppelrohrstruktur mit zusätzlicher Isoliereinlage, beispielsweise aus Filz, zurückgegriffen werden muss. Das erfindungsgemäße Rohr erreicht jedoch in etwa die gleiche Isolierwirkung wie ein Doppelrohr mit zusätzlicher Isoliereinlage aus Filz. Überdies ist das Rohr tieftemperaturbeständig bis etwa -40°C.

Durch die gute Isolierwirkung kann die Schwitzwasserbildung, also das Kondensieren vom Wasser aus der Umgebungsluft und das sich Niederschlagen dieses Wassers als Tau an der Rohraußenseite vermieden werden, so dass etwaige durch dieses Tauwasser hervorgerufene Beschädigungen am Gerät bzw. an der Umgebung des Rohrs vermieden werden.

Vorteilhafte Ausführungsformen sind durch die übrigen Ansprüche gekennzeichnet.

Die mindestens eine Innenlage ist aus Papier. Das Papier dient als gute Wärmeisolierschicht, insbesondere weil ein Papier mit besonderen Isoliereigenschaften verwendet wird, beispielsweise wie das in der US 5 325 893 beschriebene Papier, bei dem Lufteinschlüsse vorhanden sind und das somit als Isolierpapier wirkt. Das Papier erzeugt zudem gute Schalldämpfeigenschaften bei einer geringen Wärmeleitzahl. Somit können Strömungsgeräusche, z.B. aus dem Inneren des Rohres, gedämpft werden bzw. kann eingeleiteter Schall, beispielsweise durch einen angeschlossenen Lüfter, absorbiert werden.

So ist nach einer bevorzugten Ausführungsform die mittlere Lage aus Aluminium gestaltet, was einerseits die gewünschten mechanischen Festigkeitseigenschaften herstellt und gleichzeitig ein gut im Flexrohrverfahren nach der Patentschrift DE 30 167 19 C2 zu verarbeitendes Material ist. Durch die Flexibilität des Rohres bleibt eine hohe Variabilität bei der Montage des fertigen Rohrs, z.B. auf engem Raum, erhalten.

Nach einer bevorzugten Ausführungsform ist die Außenlage aus Kunststoff gebildet. Der Kunststoff ist ein gut isolierender Film, der eine Oberfläche aufweist, die einerseits geschlossen ist, so dass Luft oder isolierende Gasbläschen darin enthalten sein können, andererseits ist die Oberfläche auch gut überstreichbar, spritzbar oder anders einfärbbar so dass hinsichtlich einer optisch ansprechenden Gestaltung keinerlei Nachteile entstehen. Die glänzende, farbige Oberfläche der Außenlage trägt vielmehr zu einem ansprechenden Äußeren bei.

Durch die erfindungsgemäße Lösung weist die Außenlage eingeschlossene Luft- oder Gasbläschen oder einen eingeschlossenen Luft- oder Gasfilm auf. Dadurch wird die wärmeisolierende Wirkung weiter verbessert.

Nach einer bevorzugten Ausführungsform ist das Material der Außenlage Kunststoff und das Material der mittleren Lage Aluminium, wobei die Außenlage mit der mittleren Lage durch Coextrusion verbunden ist. Dies ist ein kostengünstiges und bewährtes Herstellungsverfahren.

Nach einer weiteren bevorzugten Ausführungsform sind die Innenlage und die mittlere Lage des flexiblen Rohrs oder flexiblen Schlauchs und/oder die mittlere Lage und die Außenlage durch Kleben oder Siegeln miteinander verbunden. Auch dies bietet eine kostengünstige Herstellung und vermeidet eine wesentliche Verdickung der Rohrwand gegenüber herkömmlichen Flexrohren, die einen Aufbau aus Aluminium und Pappe haben.

Vorzugsweise sind zwei Außenlagen, beispielsweise zwei Außenlagen aus lufteinschließender Kunststofffolie, vorgesehen. Dies hat sich als besonders die Isolierung fördernd erwiesen.

Vorteilhafterweise sind zwei Innenlagen, beispielsweise zwei Innenlagen aus Isolierpapier vorhanden. Auch dies ist hinsichtlich der Isolierung besonders vorteilhaft.

Für die Gestaltung des erfindungemäßen flexiblen Rohres bzw. Schlauchs wird ferner bevorzugt, dass das Rohr bzw. der Schlauch gerillt ist. Hierdurch lässt sich die Flexibilität und Biegbarkeit des Rohres zum Einbau in begrenztem Raum besonders zuverlässig und umfassend erreichen. Durch Verwendung von Aluminium als die Festigkeit gebender Werkstoff wird schließlich ein bezüglich des Einbaus sehr flexibel einsetzbares Rohr erzielt, das dennoch die erforderlichen mechanischen Festigkeitseigenschaften aufweist. Zusätzlich trägt die gewellte Ausbildung der Oberfläche des Rohres wiederum zur Isolierung bei.

Nach einer bevorzugten Ausführungsform ist das flexible Rohr durch wendelförmiges Wickeln hergestellt. Dabei geschieht das wendelförmige Wickeln der Gestalt, dass sich die jeweiligen Randbereiche der Wickelschichten überlappen und ineinander greifen. Dieses Herstellungsverfahren hat sich für flexible Wickelrohre bewährt und lässt sich auch auf das erfindungsgemäße flexible Wickelrohr mit dem dreilagigen Aufbau anwenden. Dabei kann das Rohr entweder bereits aus vorgerilltem Material gewickelt werden oder aber es kann ein glattes Bandmaterial verwendet werden, so dass zunächst ein glattwandiges Rohr entsteht, das nachfolgend durch Drücken in einem Formwerkzeug gerillt wird.

Bei der Verwendung von geprägtem Papier kann dieses bereits mit einer selbstklebenden Rückseite ausgerüstet sein oder mit einem durch Hitze aktivierbaren Kleber, der nach dem Verformen des Rohrs aktiviert wird. Es ist jedoch auch die Verwendung von Kaschierkleber denkbar, der nach dem Wickeln aufgebracht wird.

### Kurze Beschreibung der Zeichnungen

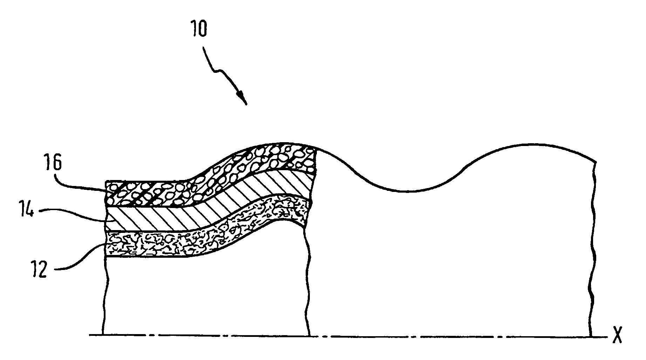

Nachfolgend wird die Erfindung rein beispielhaft anhand der beigefügten Figur beschrieben, die ein flexibles Rohr in einer Ausführungsform der Erfindung zeigt.

Das flexible Rohr 10, wird beispielsweise als Luftführungsrohr zum Führen von Kaltluft von einem Kühlgerät in einem Caravan eingesetzt. Es ist, wie es in der Figur gezeigt ist, als dreilagiges flexibles Rohr ausgebildet. Die drei Lagen, nämlich eine Innenlage 12 aus Papier, eine mittlere Lage 14 aus Aluminium und eine äußere Lage aus Luft einschließendem Kunststoff 16 sind übereinander gelegt, wie es in der Figur gezeigt ist. Dabei ist zu beachten, dass die Figur nur einen Ausschnitt aus dem flexiblen Rohr zeigt, dass selbstverständlich rotationssymmetrisch ausgebildet ist. Die Symmetrieachse ist mit X bezeichnet. Ein Teil des Rohres 10 ist aufgeschnitten dargestellt, so dass die Schichten 12, 14, 16 erkennbar sind. Die Geometrie, insbesondere die Querschnittsform des Rohres, ist jedoch je nach Bedarf frei wählbar.

Bevorzugterweise ist, wie es in der Figur dargestellt ist, die äußere Schicht 16 mit Lufteinschlüssen versehen und weist dennoch eine geschlossene Oberfläche auf, die hinsichtlich ihres optischen Erscheinungsbildes frei gestaltbar ist, z.B. durch Überstreichen oder Spritzen. Die Innenlage 12 besteht aus Isolierpapier, das ebenfalls mit Lufteinschlüssen oder ähnlichem versehen ist, um erhöhte Isoliereigenschaften gegenüber normalen Papier vorzusehen. Es ist jedoch auch herkömmliches Papier einsetzbar.

Schließlich sei noch angemerkt, dass die äußere Schicht 16, eine Kunststoffschicht mit Lufteinschlüssen, vorzugsweise zweilagig ausgebildet ist. Ebenso ist die innere Schicht 12 aus Papier oder Isolierpapier, ggf. mit Lufteinschlüssen bevorzugterweise zweilagig.

Nachfolgend wird noch das Ergebnis von Versuchen dargestellt, die für verschiedene Rohrmuster die Isoliereigenschaften gegen kalte Luft untersuchten. Dazu wurden Strömungsversuche durchgeführt und die Oberflächen- und Lufttemperaturen am Rohr ermittelt. Insbesondere wurde die Oberflächentemperatur des Rohres nach 200 mm nach dem Lufteintritt und die Oberflächentemperatur des Rohres 1000 mm entfernt vom Lufteintritt gemessen. Schließlich wurde die Lufteintrittstemperatur sowie die Luftaustrittstemperatur und die Umgebungstemperatur, die bei allen Versuchen bei 27,8°C lag, festgehalten.

Dabei wurden jeweils Rohre untersucht, die eine Rohrlänge von 1200 mm hatten und einen gleichen Rohrdurchmesser aufwiesen. Die Rohre wurden mit Luft bei einer Temperatur von 16°C durchströmt, die einer Einstellung eines Klimageräts auf 16°C entspricht.

Im Einzelnen war der Aufbau der Rohre (jeweils von innen nach außen) folgender:
1. Vergleichsbeispiel:
   Papier - Papier - Papier - Aluminium
2. Vergleichsbeispiel:
   Aluminium - Papier gelocht - Papier gelocht - Kunststoff geschäumt - Kunststoff geschäumt
3. Vergleichsbeispiel:
   Al-Folie + Papier, gekreppt + Polyamidvlies + Al-Glas-Verbund
4. Erfindung
   Papier - Aluminium - Kunststoff, lufteinschließend mit geschlossener, glatter Oberfläche
5. Vergleichsbeispiel
   Al-Folie + Papier, gekreppt + Beflockung
6. Vergleichsbeispiel
   Papier - Papier - Aluminium beflockt
7. Vergleichsbeispiel
   Aluminium - Papier - Kunststoff
8. Vergleichsbeispiel
   Aluminium - Papier - Kunststoff + Polyamidvlies + Al-Glas-Verbundfolie

Wie der untenstehenden Tabelle 1 zu entnehmen ist, zeigte das erfindungsgemäße Rohr (Beispiel 4) die höchste Oberflächentemperatur sowohl nach 200 mm vom Lufteintritt entfernt als auch nach 1000 mm vom Lufteintritt entfernt auf, was zur geringsten Differenz der Oberflächentemperatur zur Raumtemperatur unter den Versuchsbeispielen führt. Daher kann mit dem erfindungsgemäßen Rohr sehr zuverlässig die Tauwasserbildung auf der Rohraußenseite vermieden werden.

Der wesentliche Aspekt der Erfindung liegt darin, durch geeigneten Aufbau eines flexiblen Rohrs ein einwandiges Rohr zu schaffen, das bei einer Führung von Kaltluft im Rohrinneren höchste Isoliereigenschaften aufweist.

**Tabelle 1**

| Muster | Oberflächentemperatur nach 200 mm vom Lufteintritt (°C) | | Oberflächentempratur nach 1000 mm vom Lufteintritt (°C) | | Lufteintrittstemperatur (°C) | Luftaustrittstemperatur (°C) | Umgebungstemperatur (°C) |
|---|---|---|---|---|---|---|---|
| | | | | | | | |
| | Oberflächentemp. | Differenz zur Umgebungstemp. | Oberflächentemp. | Differenz zur Umgebungstemp. | | | |
| 1 | 17,2 | 10,6 | 17,9 | 9,9 | 9,6 | 9,8 | 27,8 |
| 2 | 23,2 | 4,6 | 23,3 | 4,5 | 9,4 | 10,0 | 27,8 |
| 3 | 20,9 | 6,9 | 21,3 | 6,5 | 9,3 | 9,8 | 27,8 |
| 4 | 23,9 | 3,9 | 24,9 | 2,9 | 9,4 | 9,8 | 27,8 |
| 5 | 23,4 | 4,4 | 23,4 | 4,4 | 9,5 | 9,7 | 27,8 |
| 6 | 23,6 | 4,2 | 23,7 | 4,1 | 9,6 | 9,7 | 27,8 |
| 7 | 20,3 | 7,5 | 20,8 | 7,0 | 9,6 | 9,7 | 27,8 |
| 8 | 22,8 | 5,0 | 23,1 | 4,7 | 9,6 | 9,8 | 27,8 |

## Patentansprüche

1. Flexibles Rohr (10) oder flexibler Schlauch, insbesondere zum Führen von Kaltluft, umfassend mindestens eine als innerste Lage vorgesehene Innenlage (12) aus Isolierpapier, eine mittlere (14) Lage aus festigkeitsgebendem Material und mindestens eine Außenlage (16) aus Luft einschließendem Material, das als äußerste Lage vorgesehen ist.

2. Flexibles Rohr (10) oder flexibler Schlauch nach Anspruch 1, **dadurch gekennzeichnet, dass** die mittlere Lage (14) aus Aluminium ist.

3. Flexibles Rohr (10) oder flexibler Schlauch nach einem der vorhergehenden Ansprüche, **dadurch gekennzeichnet, dass** die mindestens eine Außenlage (16) aus Luft einschließendem Kunststoff ist.

4. Flexibles Rohr (10) oder flexibler Schlauch nach einem der vorhergehenden Ansprüche, **dadurch gekennzeichnet, dass** die Außenlage (16) ein Luft oder isolierende Gasbläschen enthaltender Film mit einer geschlossenen Oberfläche ist.

5. Flexibles Rohr (10) oder flexibler Schlauch nach einem der vorhergehenden Ansprüche, **dadurch gekennzeichnet, dass** die Innenlage (12) und die mittlere Lage (14) und/oder die mittlere Lage (14) und die Außenlage (16) durch Kleben oder Siegeln verbunden sind.

6. Flexibles Rohr (10) oder flexibler Schlauch nach einem der vorhergehenden Ansprüche, **dadurch gekennzeichnet, dass** das Material der Außenlage (16) Kunststoff ist und das Material der mittleren (14) Lage Aluminiumfolie ist und die Außenlage (16) mit der mittleren Lage (14) durch Coextrusion verbunden ist.

7. Flexibles Rohr (10) oder flexibler Schlauch nach einem der vorhergehenden Ansprüche, **dadurch gekennzeichnet, dass** zwei Außenlagen (16) vorgesehen sind.

8. Flexibles Rohr (10) oder flexibler Schlauch nach einem der vorhergehenden Ansprüche, **dadurch gekennzeichnet, dass** zwei Innenlagen (12) vorgesehen sind.

9. Flexibles Rohr (10) oder flexibler Schlauch nach einem der vorhergehenden Ansprüche, **dadurch gekennzeichnet, dass** das Rohr/der Schlauch gerillt ist.

10. Flexibles Rohr (10) oder flexibler Schlauch nach einem der vorhergehenden Ansprüche, **dadurch gekennzeichnet, dass** das Rohr/der Schlauch durch spiralförmiges Wickeln von Bandmaterial derart, dass sich die jeweiligen Randbereiche überlappen und ineinander greifen, gebildet wird.

## Claims

1. Flexible tube (10) or flexible hose, in particular for carrying cold air, comprising at least one inner layer (12) of insulating paper provided as the innermost layer, a middle layer (14) of strengthening material, and at least one outer layer (16) of air-trapping material, that is provided as the outermost layer.

2. Flexible tube (10) or flexible hose according to claim 1, **characterized in that** the middle layer (14) is made of aluminium.

3. Flexible tube (10) or flexible hose according to one of the preceding claims, **characterized in that** the at least one outer layer (16) is made of air-trapping plastics material.

4. Flexible tube (10) or flexible hose according to one of the preceding claims, **characterized in that** the outer layer (16) is a foil, which contains air or insulating gas bubbles and has a closed surface.

5. Flexible tube (10) or flexible hose according to one of the preceding claims, **characterized in that** the inner layer (12) and the middle layer (14) and/or the middle layer (14) and the outer layer (16) are connected by gluing or sealing.

6. Flexible tube (10) or flexible hose according to one of the preceding claims, **characterized in that** the material of the outer layer (16) is plastics material and the material of the middle layer (14) is aluminium foil and the outer layer (16) is connected to the middle layer (14) by coextrusion.

7. Flexible tube (10) or flexible hose according to one of the preceding claims, **characterized in that** two outer layers (16) are provided.

8. Flexible tube (10) or flexible hose according to one of the preceding claims, **characterized in that** two inner layers (12) are provided.

9. Flexible tube (10) or flexible hose according to one of the preceding claims, **characterized in that** the tube/hose is grooved.

10. Flexible tube (10) or flexible hose according to one of the preceding claims, **characterized in that** the tube/hose is formed by spirally winding strip material in such a way that the respective edge regions mutually overlap and engage one into the other.

## Revendications

1. Tube flexible (10) ou tuyau flexible, en particulier pour l'acheminement d'air froid, comprenant au moins une couche intérieure (12) en papier isolant prévue comme la couche la plus intérieure, une couche centrale (14) en matière solide et au moins une couche extérieure (16) en matière contenant de l'air, qui est prévue comme la couche la plus extérieure.

2. Tube flexible (10) ou tuyau flexible selon la revendication 1, **caractérisé en ce que** la couche centrale (14) est en aluminium.

3. Tube flexible (10) ou tuyau flexible selon l'une quelconque des revendications précédentes, **caractérisé en ce qu'**au moins une couche extérieure (16) est en plastique contenant de l'air.

4. Tube flexible (10) ou tuyau flexible selon l'une quelconque des revendications précédentes, **caractérisé en ce que** la couche extérieure (16) est un film présentant une surface fermée et contenant de l'air ou des bulles de gaz isolantes.

5. Tube flexible (10) ou tuyau flexible selon l'une quelconque des revendications précédentes, **caractérisé en ce que** la couche intérieure (12) et la couche centrale (14) et/ou la couche centrale (14) et la couche extérieure (16) sont reliées par collage ou scellement.

6. Tube flexible (10) ou tuyau flexible selon l'une quelconque des revendications précédentes, **caractérisé en ce que** la matière de la couche extérieure (16) est du plastique et la matière de la couche centrale (14) est une feuille d'aluminium et la couche extérieure (16) est reliée à la couche centrale (14) par coextrusion.

7. Tube flexible (10) ou tuyau flexible selon l'une quelconque des revendications précédentes, **caractérisé en ce que** deux couches extérieures (16) sont prévues.

8. Tube flexible (10) ou tuyau flexible selon l'une quelconque des revendications précédentes, **caractérisé en ce que** deux couches intérieures (12) sont prévues.

9. Tube flexible (10) ou tuyau flexible selon l'une quelconque des revendications précédentes, **caractérisé en ce que** le tube/le tuyau est rainuré.

10. Tube flexible (10) ou tuyau flexible selon l'une quelconque des revendications précédentes, **caractérisé en ce que** le tube/le tuyau est formé par enroulement spiralé de bande de matière de manière à ce que les bords respectifs se chevauchent et s'engrènent.
